# EUROPEAN PATENT APPLICATION

(11) **EP 4 772 776 A1**
(43) Date of publication of application: **08.07.2026**
(21) Application number: 24858433.6
(22) Date of filing: 22.08.2024
(51) Int. Cl.: F16K 1/38

(54) **VALVE NEEDLE ASSEMBLY OF ELECTRONIC EXPANSION VALVE, ELECTRONIC EXPANSION VALVE, THERMAL MANAGEMENT SYSTEM, AND VEHICLE**

(30) Priority: 31.08.2023 CN 202322401582 U
(71) Applicant: BYD Company Limited, Shenzhen, Guangdong 518118 (CN)
(72) Inventor: CHEN, Tuping, Shenzhen, Guangdong 518118 (CN); XU, Min, Shenzhen, Guangdong 518118 (CN); YE, Meijiao, Shenzhen, Guangdong 518118 (CN); LIU, Feng, Shenzhen, Guangdong 518118 (CN); WANG, Mengyuan, Shenzhen, Guangdong 518118 (CN)
(74) Representative: Taor, Simon Edward William
(86) International application number: PCT/CN2024/113947
(87) International publication number: WO 2025/044891

(57) **Abstract**

Provided are a valve needle assembly (20) of an electronic expansion valve, an electronic expansion valve, a thermal management system, and a vehicle. The valve needle assembly (20) of the electronic expansion valve includes: a valve stem (21), where the valve stem (21) is provided with a first stop surface (215) and a second stop surface (216); a valve needle (22), where the valve needle (22) is provided with a stopper (23), and the valve needle (22) is movable relative to the valve stem (21), so that the stopper (23) switches between abutting against the first stop surface (215) and abutting against the second stop surface (216); and an elastic member (44), where the elastic member (44) applies a force to the valve needle (22) in a direction away from the valve stem (21).

## Description

### CROSS-REFERENCE TO RELATED APPLICATIONS

This application is based on and claims priority to Chinese Patent Application No. 2023224015821 filed on August 31, 2023, which is incorporated herein by reference in its entirety.

### TECHNICAL FIELD

This application relates to the field of electronic expansion valve technologies, and in particular, to a valve needle assembly of an electronic expansion valve, an electronic expansion valve, a thermal management system, and a vehicle.

### BACKGROUND

In related technologies, a valve core in an electronic expansion valve performs reciprocating movement to open or close a valve port. However, cooperation between the valve core and the valve port may be insufficient, causing liquid leakage.

### SUMMARY

This application is intended to resolve at least one of the technical problems in the prior art. Therefore, this application provides a valve needle assembly of an electronic expansion valve. The valve needle assembly of the electronic expansion valve uses an elastic member to apply a force toward a valve port to a valve needle, so that the valve needle can sufficiently seal the valve port, thereby reducing possibility of liquid leakage when the electronic expansion valve closes the valve port, and helping improve a qualification rate of the electronic expansion valve.

This application further provides an electronic expansion valve having a valve needle assembly, a thermal management system, and a vehicle.

A valve needle assembly of an electronic expansion valve according to an embodiment of a first aspect of this application includes: a valve stem, where the valve stem is provided with a first stop surface and a second stop surface, and the first stop surface and the second stop surface are spaced apart in a movement direction of the valve stem; a valve needle, where the valve needle is provided with a stopper, at least a part of the stopper is located between the first stop surface and the second stop surface, and the valve needle is movable relative to the valve stem, so that the stopper switches between abutting against the first stop surface and abutting against the second stop surface; and an elastic member, where the elastic member is connected to the valve stem and the valve needle, and the elastic member applies a force to the valve needle in a direction away from the valve stem.

The valve needle assembly of the electronic expansion valve according to this embodiment of this application uses abutment between the stopper and the two stop surfaces to accurately control a compression amount of the elastic member, thereby accurately controlling a magnitude of a force applied by the elastic member to the valve needle in a direction facing the valve port. In this way, the valve needle can sufficiently seal the valve port, thereby reducing possibility of liquid leakage when the electronic expansion valve closes the valve port, and helping improve a qualification rate of the electronic expansion valve.

In addition, the valve needle assembly of the electronic expansion valve according to the foregoing embodiment of this application may further have the following additional technical features:

According to some embodiments of this application, an end that is of the valve stem and that faces the valve needle includes a first part and a second part. The first part is located on a side that is of the second part and that faces the valve needle. A diameter of the first part is greater than a diameter of the second part. An end face that is of the first part and that extends beyond the second part defines the first stop surface.

According to some optional embodiments of this application, the valve stem further includes a guide block. The guide block is sleeved on the valve stem. An end face that is of the guide block and that faces the first stop surface defines the second stop surface.

In some embodiments, the guide sleeve and the valve stem are of an integrally formed member.

According to some specific embodiments of this application, the valve stem further includes a third part. The third part is connected to the second part. The diameter of the second part is greater than a diameter of the third part. The guide block is sleeved on the third part and abuts against the second part.

According to some optional embodiments of this application, the valve stem further includes a guide surface. The guide surface is located on a side that is of the third part and that is away from the second part. The guide surface extends obliquely toward the third part to guide mounting of the guide block.

In some embodiments, a diameter of a cross section of the guide surface in a radial direction of the valve stem gradually increases in a direction from the valve stem to the valve needle.

According to some embodiments of this application, an accommodation cavity is disposed in the valve needle, and the elastic member is disposed in the accommodation cavity.

According to some optional embodiments of this application, a side wall of the accommodation cavity is provided with a communication hole that passes through the side wall.

According to some embodiments of this application, a movement distance of the stopper in the movement direction of the valve stem ranges from 0.1 mm to 0.3 mm.

According to an embodiment of a second aspect of this application, an electronic expansion valve is provided. The electronic expansion valve includes: a valve seat assembly, where the valve seat assembly is provided with a valve port; and a valve needle assembly, where the valve needle assembly is the valve needle assembly of the electronic expansion valve according to the embodiment of the first aspect of this application.

In the electronic expansion valve according to this embodiment of this application, the valve needle assembly according to the embodiment of the first aspect of this application is used, so that an elastic member is used to apply a force toward a valve port to a valve needle. In this way, the valve needle can sufficiently seal the valve port, thereby reducing possibility of liquid leakage when the electronic expansion valve closes the valve port, and helping improve a qualification rate of the electronic expansion valve.

According to some embodiments of this application, the electronic expansion valve further includes: a conversion member. The conversion member cooperates with the valve needle assembly to convert rotation of the conversion member into reciprocating movement of the valve needle assembly.

In some embodiments, the electronic expansion valve further includes: a cooperation bearing. The cooperation bearing is disposed between the conversion member and the valve seat assembly.

According to an embodiment of a third aspect of this application, a thermal management system is provided. The thermal management system includes the electronic expansion valve according to the embodiment of the second aspect of this application.

In the thermal management system according to this embodiment of this application, the electronic expansion valve according to the embodiment of the second aspect of this application is used, so that an elastic member is used to apply a force toward a valve port to a valve needle. In this way, the valve needle can sufficiently seal the valve port, thereby reducing possibility of liquid leakage when the electronic expansion valve closes the valve port, and helping improve a qualification rate of the electronic expansion valve.

According to an embodiment of a fourth aspect of this application, a vehicle is provided. The vehicle includes the thermal management system according to the embodiment of the third aspect of this application.

In the vehicle according to this embodiment of this application, the thermal management system according to the embodiment of the third aspect of this application is used, so that an elastic member is used to apply a force toward a valve port to a valve needle. In this way, the valve needle can sufficiently seal the valve port, thereby reducing possibility of liquid leakage when the electronic expansion valve closes the valve port, and helping improve a qualification rate of the electronic expansion valve.

Additional aspects and advantages of this application will be set forth in part in the following description, and in part will become apparent from the following description, or may be learned through the practice of this application.

### BRIEF DESCRIPTION OF DRAWINGS

The above and/or additional aspects and advantages of this application become apparent and easily understandable from the description of embodiments with reference to the following accompanying drawings, in which:

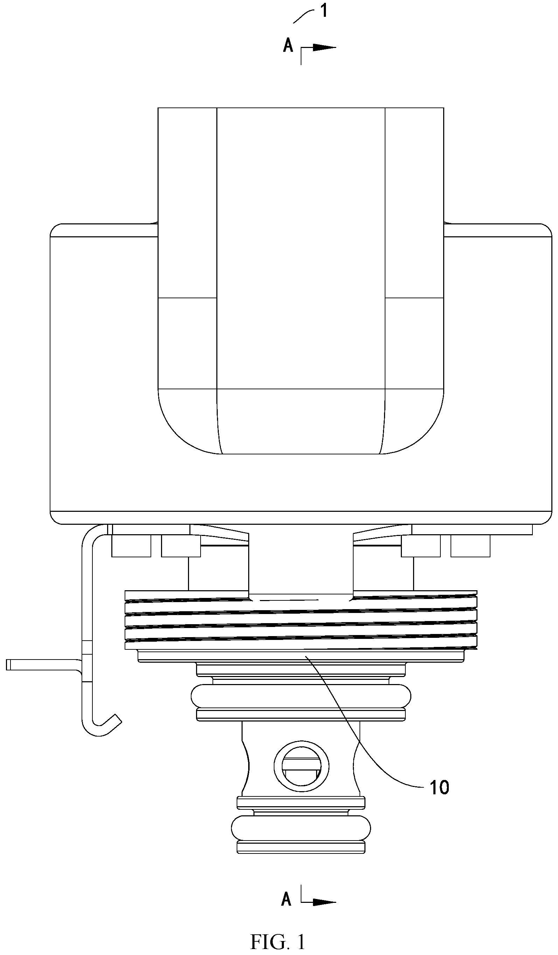

FIG. 1 is a structural diagram of an electronic expansion valve according to an embodiment of this application;
FIG. 2 is a cross-sectional view at A-A of FIG. 1;
FIG. 3 is a structural diagram of a valve needle assembly according to an embodiment of this application;

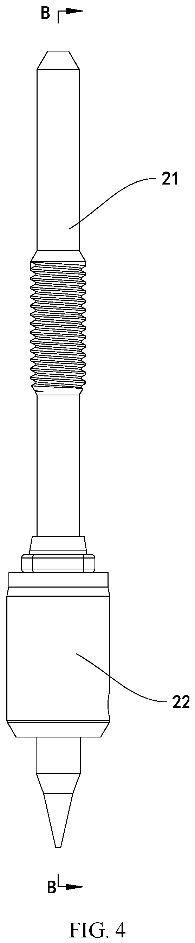

FIG. 4 is a structural diagram of a valve needle assembly according to an embodiment of this application;
FIG. 5 is a cross-sectional view at B-B of FIG. 4;

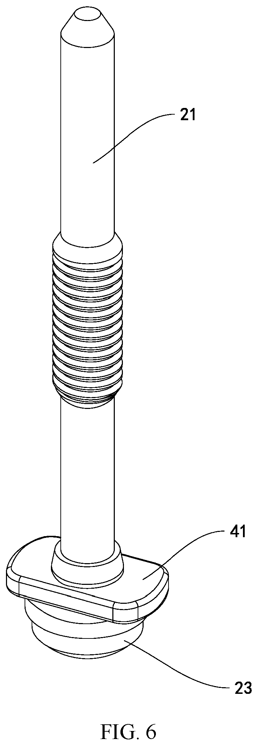

FIG. 6 is a structural diagram of a valve stem, a guide block, and a stopper according to an embodiment of this application;

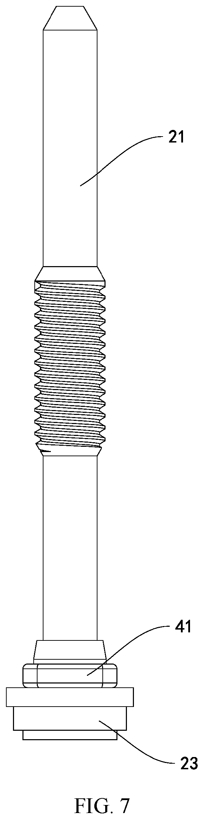

FIG. 7 is a structural diagram of a valve stem, a guide block, and a stopper according to an embodiment of this application;

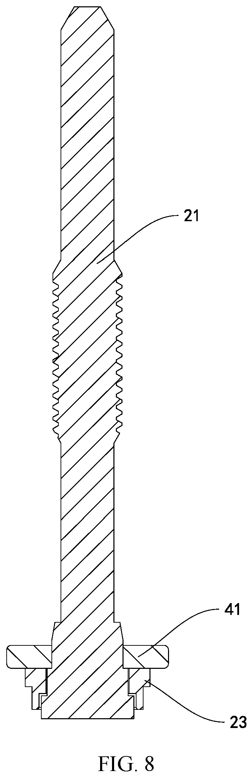

FIG. 8 is a cross-sectional view of structures of a valve stem, a guide block, and a stopper according to an embodiment of this application;

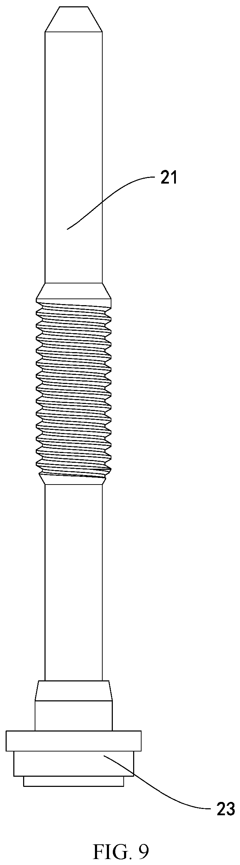

FIG. 9 is a structural diagram of a valve stem and a stopper according to an embodiment of this application;
FIG. 10 is a cross-sectional view of structures of a valve stem and a stopper according to an embodiment of this application;
FIG. 11 is a structural diagram of a valve stem according to an embodiment of this application;
FIG. 12 is a structural diagram of a guide block according to an embodiment of this application;
FIG. 13 is a structural diagram of a stopper according to an embodiment of this application;

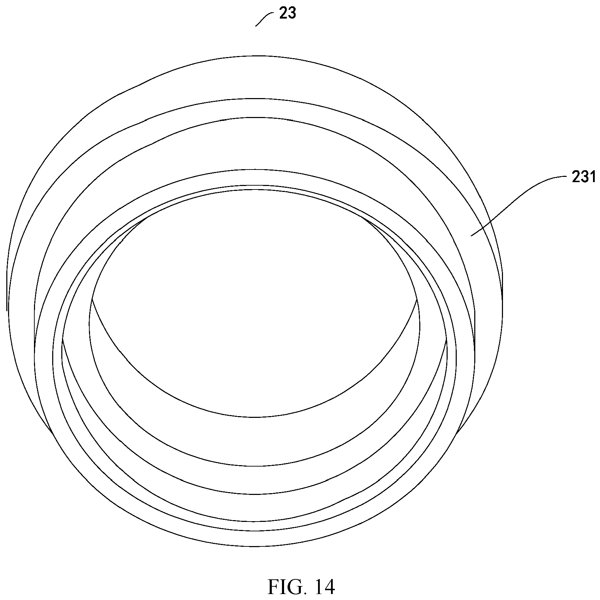

FIG. 14 is a structural diagram of a stopper according to an embodiment of this application;
FIG. 15 is a structural diagram of a guide block according to an embodiment of this application;
FIG. 16 is a structural diagram of a guide block according to an embodiment of this application;
FIG. 17 is a cross-sectional view of a guide block according to an embodiment of this application; and
FIG. 18 is a structural diagram of a vehicle according to an embodiment of this application.

Reference numerals: 1: electronic expansion valve; 10: valve seat assembly; 131: valve port;
20: valve needle assembly; 201: first part; 202: second part; 203: third part;
21: valve stem; 211: guide surface; 212: first step portion; 215: first stop surface; 216: second stop surface;
22: valve needle; 221: accommodation cavity; 223: communication hole; 23: stopper; 231: first cooperation surface; 232: second cooperation surface;
30: guide seat; 31: movement cavity; 311: limiting surface; 39: manufacturing hole; 41: guide block; 42: cooperation bearing; 421: inner ring assembly; 422: outer ring assembly; 44: elastic member;
50: conversion member; 60: rotor assembly; 91: vehicle; 92: thermal management system.

### DESCRIPTION OF EMBODIMENTS

Embodiments of this application are described in detail below, examples of which are illustrated in the accompanying drawings. Same or similar reference numerals throughout indicate same or similar elements or elements having same or similar functions. The embodiments described below with reference to the accompanying drawings are examples and are intended to explain this application, and shall not be construed as a limitation on this application.

In the description of this application, it should be understood that a directional or positional relationship indicated by terms "center," "longitudinal", "transverse", "vertical", "width", "thickness", "top", "bottom", "inner", "outer", and the like is based on a directional or positional relationship shown in the accompanying drawings, which is only for the purpose of facilitating the description of this application and simplifying the description, and is not intended to indicate or imply that an apparatus or element referred to must have a specific direction, be constructed and operated in a specific direction. Therefore, these terms should not be construed as limiting this application.

Furthermore, terms "first" and "second" are merely intended for the purpose of description, and cannot be understood as indicating or implying relative importance or implicitly indicating a quantity of indicated technical features. Therefore, a feature limited by "first" or "second" may explicitly or implicitly include one or more features. In the description of this application, unless otherwise clearly and specifically defined, "a plurality of" means at least two, for example, two or three.

In this application, unless otherwise clearly specified and defined, a term "mounting", "being connect to", "connection", "fastening", or the like should be understood in a broad sense, for example, may be a fixed connection, a detachable connection, or an integral connection; or may be a mechanical connection or an electrical connection or communication with each other; or may be a direct connection, an indirect connection through an intermediary medium, an internal communication between two elements, or an interaction between two elements. For a person of ordinary skill in the art, specific meanings of the foregoing terms in this application may be interpreted according to a specific condition.

In this application, unless otherwise clearly specified and defined, the description that a first feature is "above" or "below" a second feature may indicate that the first feature and the second feature are in direct contact, or may indicate that the first feature and the second feature are not in direct contact but are in contact through another feature between the first feature and the second feature. Moreover, the description that the first feature is "above", "over" or "on" the second feature indicates that the first feature is directly above or obliquely above the second feature, or simply indicates that the first feature is at a higher horizontal level than the second feature.

A valve needle assembly 20 of an electronic expansion valve 1 according to an embodiment of this application is described below with reference to the accompanying drawings.

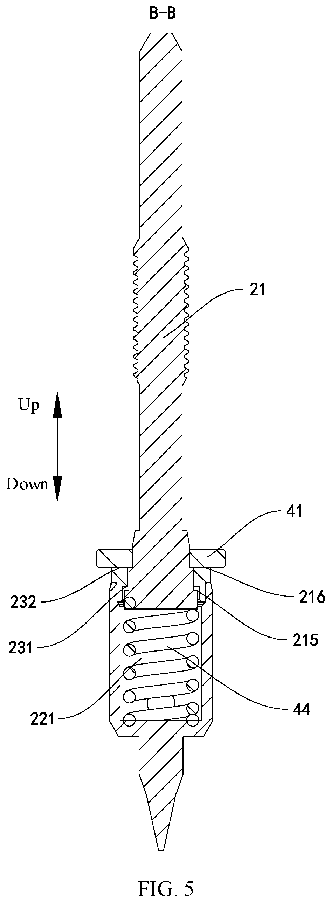

As shown in FIG. 5, a valve needle assembly 20 of an electronic expansion valve 1 according to an embodiment of this application includes a valve stem 21, a valve needle 22, and an elastic member 44.

The electronic expansion valve 1 includes a valve seat assembly 10. The valve seat assembly 10 defines a valve port 131. The valve needle assembly 20 may perform reciprocating movement within the valve seat assembly 10 to open or close the valve port 131. The elastic member 44 is connected to the valve stem 21 and the valve needle 22. The elastic member 44 applies a force to the valve needle 22 in a direction away from the valve stem 21. In this way, when the valve needle 22 closes the valve port 131, a force between the valve needle 22 and the valve port 131 increases, so that the valve needle 22 can sufficiently close the valve port 131, thereby reducing possibility of liquid leakage when the electronic expansion valve 1 closes the valve port 131, and helping improve a qualification rate of the electronic expansion valve 1.

The valve stem 21 is provided with a first stop surface 215 and a second stop surface 216. The first stop surface 215 and the second stop surface 216 are spaced apart in a movement direction of the valve stem 21. The valve needle 22 is provided with a stopper 23. At least a part of the stopper 23 is located between the first stop surface 215 and the second stop surface 216. The valve needle 22 is movable relative to the valve stem 21, so that the stopper 23 switches between abutting against the first stop surface 215 and abutting against the second stop surface 216. The first stop surface 215 and the second stop surface 216 can be used to control a range in which the valve needle 22 moves relative to the valve stem 21. Because the elastic member 44 is connected to the valve stem 21 and the valve needle 22, the range in which the valve needle 22 moves relative to the valve stem 21 is controlled, so that a degree to which the elastic member 44 is compressed can be controlled. Accordingly, a magnitude of a force applied by the elastic member 44 to the valve needle 22 can be controlled, thereby ensuring that the valve needle 22 can sufficiently close the valve port 131, and avoiding failure of the elastic member 44.

Therefore, the valve needle assembly 20 of the electronic expansion valve 1 according to this embodiment of this application uses an elastic member 44 to apply a force toward a valve port 131 to a valve needle 22. In this way, the valve needle 22 can sufficiently seal the valve port 131, thereby reducing possibility of liquid leakage when the electronic expansion valve 1 closes the valve port 131, and helping improve a qualification rate of the electronic expansion valve 1.

An electronic expansion valve 1 according to a specific embodiment of this application is described below with reference to the accompanying drawings.

As shown in FIG. 5, a valve needle assembly 20 of an electronic expansion valve 1 according to an embodiment of this application includes a valve stem 21, a valve needle 22, and an elastic member 44.

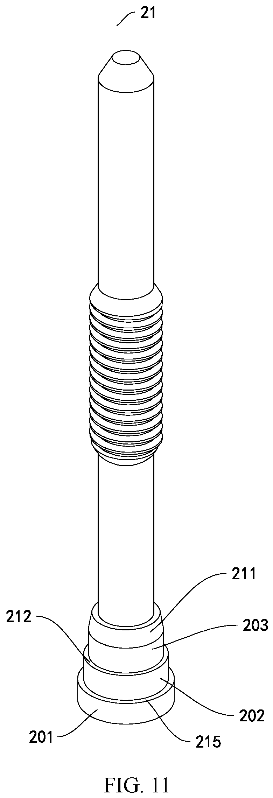

In some embodiments of this application, as shown in FIG. 5 and FIG. 11, an end that is of the valve stem 21 and that faces the valve needle 21 includes a first part 201 and a second part 202. The first part 201 is located on a side that is of the second part 202 and that faces the valve needle 22. A diameter of the first part 201 is greater than a diameter of the second part 202. An end face that is of the first part 201 and that extends beyond the second part 202 defines the first stop surface 215. When the valve stem 21 and the valve needle 22 move relatively, a distance between the stopper 23 and the first stop surface 215 gradually decreases, and the stopper 23 cooperates with the first stop surface 215 in an abutting manner, the valve needle 22 and the valve stem 21 no longer continue to move relatively.

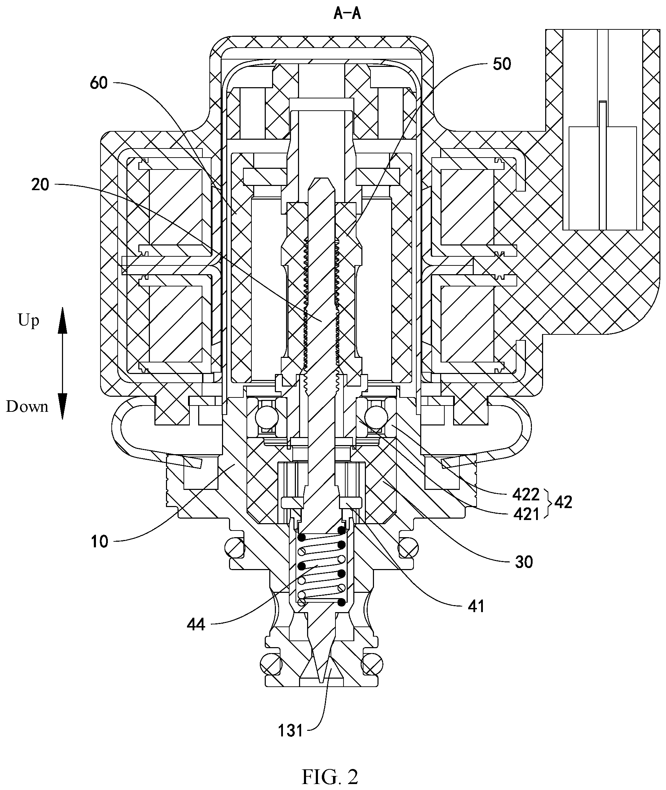

As shown in FIG. 2 and FIG. 5, in this embodiment, the valve needle assembly 20 moves along an up-down direction to open or close the valve port 131. The first stop surface 215 is located below the second stop surface 216. The stopper 23 includes a first cooperation surface 231 and a second cooperation surface 232. The first cooperation surface 231 is located below the second cooperation surface 232. When the valve needle assembly 20 closes the valve port 131, the second cooperation surface 232 cooperates with the second stop surface 216 in an abutting manner. When the valve needle assembly 20 opens the valve port 131, the first cooperation surface 231 cooperates with the first stop surface 215 in an abutting manner.

The first part 201 forms a first cylinder. The second part 202 forms a second cylinder. The stopper 23 is sleeved on the second part 202. In the up-down direction, a distance between the first cooperation surface 231 and the second cooperation surface 232 is less than a length of the second part 202. Therefore, the stopper 23 is movable on the second part 202 along the up-down direction.

When the valve needle assembly 20 opens the valve port 131, the valve stem 21 moves upward. In this case, the valve needle 22 moves downward relative to the valve stem 21. The stopper 23 moves downward, and the first cooperation surface 231 cooperates with the first stop surface 215 in an abutting manner. In this case, the valve stem 21 drives the valve needle 22 through the first stop surface 215 to move upward, so that the valve needle 22 can smoothly open the valve port 131.

When the valve needle assembly 20 closes the valve port 131, the valve stem 21 moves downward. In this case, the valve needle 22 moves upward relative to the valve stem 21. The stopper 23 moves upward, and the second cooperation surface 232 cooperates with the second stop surface 216 in an abutting manner. In this case, the valve stem 21 drives the valve needle 22 through the second stop surface 216 to move downward, so that the valve needle 22 can smoothly close the valve port 131.

In some optional embodiments of this application, as shown in FIG. 5, the valve stem 21 further includes a guide block 41. The guide block 41 is sleeved on the valve stem 21. An end face that is of the guide block 41 and that faces the first stop surface 215 defines the second stop surface 216. When the valve stem 21 and the valve needle 22 move relatively, a distance between the stopper 23 and the second stop surface 216 gradually decreases, and the stopper 23 cooperates with the second stop surface 216 in an abutting manner, the valve needle 22 and the valve stem 21 no longer continue to move relatively.

In some embodiments, the electronic expansion valve 1 includes a valve seat assembly 10 and a guide seat 30. The valve seat assembly 10 defines a valve port 131. The guide seat 30 is fastened in the valve seat assembly 10. The guide seat 30 is provided with a movement cavity 31. The guide block 41 is disposed in the movement cavity 31 in a reciprocating movement manner. The guide block 41 cooperates with the guide seat 30 to limit a degree of rotational freedom of the valve stem 21, so that the guide block 41 can only move within the movement cavity 31 and cannot rotate within the movement cavity 31, and the valve stem 21 can only move within the valve seat assembly 10 and cannot rotate.

Specifically, because the guide block 41 is sleeved on the valve stem 21, a degree of rotational freedom of the guide block 41 is limited, so that degrees of rotational freedom of the valve stem 21 and the valve needle 22 can be limited. When the valve needle assembly 20 opens or closes the valve port 131, compared with a situation in which the valve needle assembly 20 rotates and moves to close the valve port 131, the valve needle assembly 20 only performs reciprocating movement within the valve seat assembly 10 and does not rotate relative to the valve needle assembly 20, thereby helping reduce wear between the valve needle assembly 20 and the valve seat assembly 10, and reduce noise generated between the valve needle assembly 20 and the valve seat assembly 10.

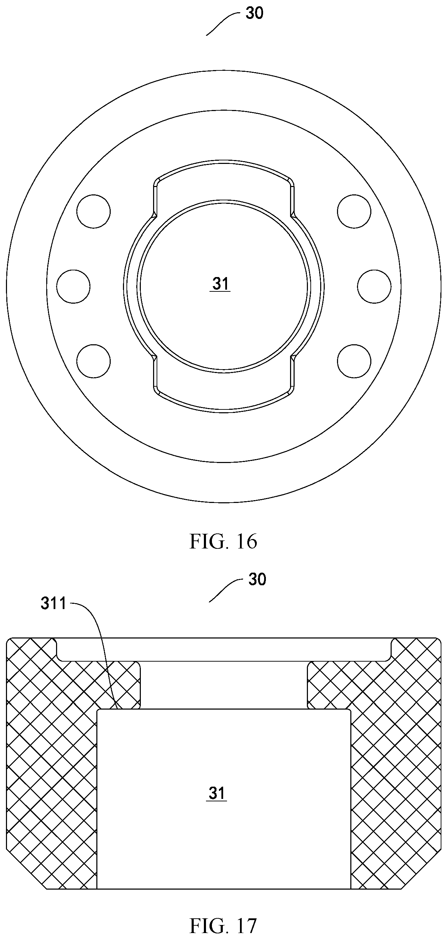

In some embodiments, as shown in FIG. 17, a limiting surface 311 is disposed on a side that is of the movement cavity 31 and that is away from the valve port 131. The limiting surface 311 is configured to cooperate with the guide block 41 to limit movement displacement of the guide block 41. A range of the movement displacement of the guide block 41 is limited, so that a range of movement of the valve needle assembly 20 can be limited to control an extent to which the valve needle assembly 20 fully opens the valve port 131. Specifically, when the valve needle assembly 20 moves in a direction away from the valve port 131 to open the valve port 131, the valve needle assembly 20 no longer continues to move when the guide block 41 cooperates with the limiting surface 311. In this case, the valve needle assembly 20 fully opens the valve port 131.

In addition, because the guide seat 30 is fastened in the valve seat assembly 10, the guide seat 30 is fixed. When the valve needle assembly 20 performs reciprocating movement to open the valve port 131, the limiting surface 311 and the guide block 41 only move relatively, and do not rotate relatively. In this way, when the limiting surface 311 cooperates with the guide block 41, friction between the limiting surface 311 and the guide block 41 is small, and no rotational friction is generated, thereby helping reduce noise generated in the electronic expansion valve 1.

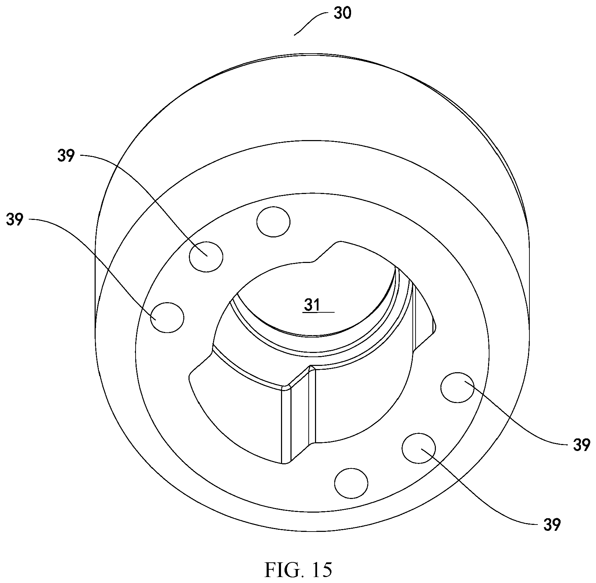

In some examples, as shown in FIG. 15, the guide seat 30 is provided with a plurality of manufacturing holes 39 to facilitate injection molding of the guide seat 30. Specifically, the guide seat 30 defines a movement cavity 31. The movement cavity 31 extends along the up-down direction. In a radial direction of the guide seat 30, a wall thickness of the guide seat 30 is larger. The manufacturing hole 39 extends along the up-down direction, so that the wall thickness of the guide seat 30 can be reduced, and accordingly, possibility of deformation of a peripheral wall of the guide seat 30 is reduced when the guide seat 30 is injection molded.

In some embodiments, an outer peripheral wall of the guide block 41 forms a non-circular shape. At least a part of an inner wall of the movement cavity 31 forms a non-circular shape cooperating with the guide block 41, so that when the guide block 41 has a tendency to rotate, the inner wall of the movement cavity 31 applies a rotation stopping force to rotation of the guide block 41. In this way, the guide block 41 does not rotate in the movement cavity 31, and accordingly, rotation of the valve needle assembly 20 is limited by the guide block 41, so that the valve needle assembly 20 does not rotate in the valve seat assembly 10. This helps reduce wear between the valve needle assembly 20 and the valve seat assembly 10.

In some embodiments, the outer peripheral wall of the guide block 41 cooperates with at least a part of the inner wall of the movement cavity 31. When the valve needle assembly 20 performs reciprocating movement, the guide block 41 performs reciprocating movement together with the valve needle assembly 20. In this case, the inner wall of the movement cavity 31 can guide a movement direction of the guide block 41, so that the guide block 41 can smoothly perform reciprocating movement within the movement cavity 31. Accordingly, movement of the valve needle assembly 20 is guided, so that the valve needle assembly 20 can smoothly open or close the valve port 131.

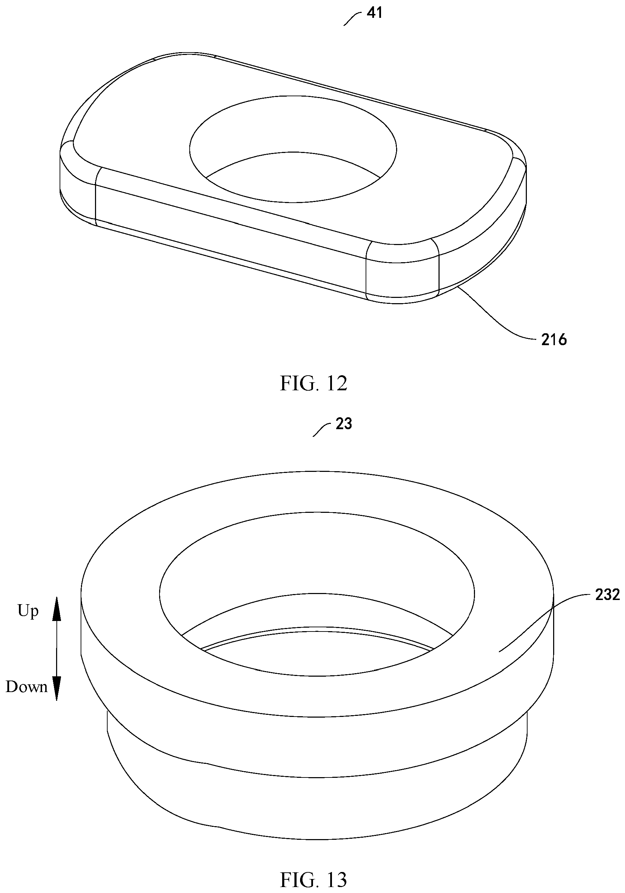

In some examples, as shown in FIG. 12 and FIG. 15, the outer peripheral wall of the guide block 41 forms an oblong shape. At least a part of an inner wall of the movement cavity 31 forms an oblong shape to cooperate with the guide block 41 in a rotation stopping manner. When the guide block 41 has a tendency to rotate, the inner wall of the movement cavity 31 applies a rotation stopping force to the outer peripheral wall of the guide block 41, thereby limiting rotation of the guide block 41. In this way, the guide block 41 can only perform reciprocating movement within the movement cavity 31 and cannot rotate, so that the valve needle assembly 20 can only perform reciprocating movement and cannot rotate. Accordingly, when the valve needle assembly 20 performs reciprocating movement to open or close the valve port 131, friction between the valve needle assembly 20 and the valve seat assembly 10 can be reduced, thereby reducing wear between the valve needle assembly 20 and the valve seat assembly 10.

In some other examples, the outer peripheral wall of the guide block 41 may form a triangular shape, a square shape, a hexagon shape, or the like. At least a part of the inner wall of the movement cavity 31 in the guide seat 30 correspondingly forms a triangular shape, a square shape, a hexagon shape, or the like to cooperate with the guide block 41 in a rotation stopping manner.

In some other embodiments, the outer peripheral wall of the guide block 41 is provided with one of a guide groove and a guide protrusion. The inner wall of the movement cavity 31 is provided with the other of the guide protrusion and the guide groove. The guide protrusion extends into the guide groove and can slide within the guide groove, so that cooperation between the guide protrusion and the guide groove is used to guide a movement direction of the guide block 41. In addition, when the guide block 41 has a tendency to rotate, cooperation between the guide protrusion and the guide groove is used to limit rotation of the guide block 41, thereby limiting rotation of the valve needle assembly 20.

For example, the outer peripheral wall of the guide block 41 is provided with a guide groove. The inner wall of the movement cavity 31 is provided with a guide protrusion. The guide groove and the guide protrusion both extend along the up-down direction. When the valve needle assembly 20 moves along the up-down direction, the guide groove slides along the up-down direction. The guide protrusion slides within the guide groove along the up-down direction, thereby limiting a movement direction of the guide block 41, and accordingly, limiting a movement direction of the valve needle assembly 20. In this way, the valve needle assembly 20 can smoothly perform reciprocating movement along the up-down direction, so that the valve needle assembly 20 can smoothly open or close the valve port 131.

In addition, when the valve needle assembly 20 has a tendency to rotate, because the guide protrusion extends into the guide groove, and the guide seat 30 is fastened to the valve seat assembly 10, a side wall of the guide groove applies a rotation stopping force to the guide protrusion, thereby limiting rotation of the guide block 41. In this way, the guide block 41 and the valve needle assembly 20 can only perform reciprocating movement along the up-down direction and cannot rotate. Accordingly, when the valve needle assembly 20 performs reciprocating movement, and the valve needle assembly 20 opens or closes the valve port 131, friction between the valve needle assembly 20 and the valve seat assembly 10 can be reduced, and accordingly, wear between the valve needle assembly 20 and the valve seat assembly 10 can be reduced. In addition, this helps reduce noise generated in the electronic expansion valve 1.

In some embodiments, the guide sleeve 41 and the valve stem 21 are of an integrally formed member, thereby helping reduce mounting steps, and reduce complexity of parts of the valve needle assembly 20. In this way, cooperation between the guide sleeve 41 and the stopper 23 is used to control a compression force applied to the elastic member 44. In other embodiments, the guide sleeve 41 and the valve stem 21 are of a separate structure, and the guide sleeve is fastened to the valve stem 22.

In some specific embodiments of this application, as shown in FIG. 11, the valve stem 21 further includes a third part 203. The third part 203 is connected to the second part 202. The diameter of the second part 202 is greater than a diameter of the third part 203. The guide block 41 is sleeved on the third part 203 and abuts against the second part 202, thereby defining a position of the guide block 41 on the valve stem 21. In this way, the guide block 41 can be fixed at a specified position on the valve stem 21, and accordingly, cooperation between the guide block 41 and the guide seat 30 can be used to limit rotation of the valve stem 21.

In some embodiments, as shown in FIG. 11, the valve stem 21 further includes a guide surface 211. The guide surface 211 is located on a side that is of the third part 203 and that is away from the second part 202. The guide surface 211 extends obliquely toward the third part 203 to guide mounting of the guide block 41. Accordingly, the guide block 41 can be smoothly sleeved on the third part 203, so that the guide block 41 cooperates with the third part 203 fixedly. Accordingly, the guide block 41 is fastened to the valve stem 21, so that cooperation between the guide block 41 and the guide seat 30 can be used to limit rotation of the valve stem 21.

As shown in FIG. 11, in this embodiment, the second part 202 is forms a second cylinder. The third part 203 forms a third cylinder. The diameter of the second part 202 is greater than a diameter of the third part 203. An end face that is of the second part 202 and that extends beyond the third part 203 defines a first step portion 212. The guide block 41 is located between the guide surface 211 and the first step portion 212. The guide block 41 is in an interference fit with the third part 203 to limit a position of the guide block 41 on the valve stem 21. When the valve stem 21 performs reciprocating movement, the valve stem 21 can drive the guide block 41 to perform reciprocating movement, thereby preventing the valve stem 21 from being disengaged from the guide block 41 when the valve stem 21 performs reciprocating movement. Accordingly, cooperation between the guide block 41 and the guide seat 30 is used to limit rotation of the valve stem 21, and limit movement displacement of the valve stem 21.

In some embodiments of this application, a diameter of a cross section of the guide surface 211 in a radial direction of the valve stem 21 gradually increases in a direction from the valve stem 21 to the valve needle 22. The guide block 41 is moved in the direction from the valve stem 21 to the valve needle 22. In this way, when the guide block 41 is fastened to the third part 203, a gap between the guide block 41 and the third part 203 gradually decreases, and accordingly, the guide block 41 can be fastened to the third part 203.

In some embodiments of this application, as shown in FIG. 5, an accommodation cavity 221 is disposed in the valve needle 22, and the elastic member 44 is disposed in the accommodation cavity 221. When the valve needle 22 seals the valve port 131, the elastic member 44 applies a force toward the valve port 131 to the valve needle 22. In this way, a force between the valve needle 22 and the valve port 131 increases, so that the valve needle 22 can sufficiently seal the valve port 131, thereby reducing possibility of liquid leakage when the electronic expansion valve 1 closes the valve port 131, and helping improve a qualification rate of the electronic expansion valve 1.

In some embodiments, as shown in FIG. 5, the elastic member 44 extends along the up-down direction. When the valve needle 22 seals the valve port 131, the elastic member 44 applies a downward force to the valve needle 22. In this way, the valve needle 22 can sufficiently seal the valve port 131, thereby reducing possibility of liquid leakage when the electronic expansion valve 1 closes the valve port 131, and helping improve a qualification rate of the electronic expansion valve 1.

In some embodiments, a lower end of the valve stem 21 extends into the accommodation cavity 221 and may move within the accommodation cavity 221 by a certain distance, thereby compressing the elastic member 44 in the accommodation cavity 221. In this way, the elastic member 44 applied a force toward the valve port 131 to the valve needle 22.

In some embodiments, the electronic expansion valve 1 includes a valve seat assembly 10 and a guide seat 30. The valve seat assembly 10 defines a valve port 131. The guide seat 30 is fastened in the valve seat assembly 10. The guide seat 30 is provided with a movement cavity 31. The valve stem 21 is provided with a guide block 41. The guide block 41 is disposed in the movement cavity 31 in a reciprocating movement manner. The valve stem 21 is provided with a first stop surface 216. The guide block 41 is disposed above the first stop surface 216. The guide block 41 defines a second stop surface 216 on a side facing the valve needle 22.

The valve needle 22 includes a stopper 23. The stopper 23 includes a first cooperation surface 231 and a second cooperation surface 232. The first cooperation surface 231 and the second cooperation surface 232 are located between the first stop surface 215 and the second stop surface 216. The first cooperation surface 231 is located below the second cooperation surface 232. When the valve needle assembly 20 closes the valve port 131, the second cooperation surface 232 cooperates with the second stop surface 216 in an abutting manner. When the valve needle assembly 20 opens the valve port 131, the first cooperation surface 231 cooperates with the first stop surface 215 in an abutting manner.

When the valve needle assembly 20 closes the valve port 131, and the valve stem 21 and the guide block 41 move downward relative to the valve needle 22, the second stop surface 216 cooperates with the second cooperation surface 232 in an abutting manner. The valve stem 21 can drive the valve needle 22 to move downward, so that the valve needle 22 can seal the valve port 131. In addition, the valve stem 21 compresses the elastic member 44 in the accommodation cavity 221, so that the elastic member 44 applies a force toward the valve port 131 to the valve needle 22, and the valve needle 22 can sufficiently seal the valve port 131.

Specifically, the second stop surface 216 cooperates with the second cooperation surface 232 in an abutting manner to control a length that is of the valve stem 21 and that extends into the accommodation cavity 221, and accordingly, control a degree to which the valve stem 21 compresses the elastic member 44, thereby avoiding failure of the elastic member 44.

When the valve needle assembly 20 closes the valve port 131, and the valve stem 21 and the guide block 41 move upward relative to the valve needle 22, the valve needle 22 moves upward relative to the valve stem 21. The stopper 23 moves upward, and the second cooperation surface 232 cooperates with the second stop surface 216 in an abutting manner. In this case, the valve stem 21 drives the valve needle 22 through the second stop surface 216 to move downward, so that the valve needle 22 can smoothly close the valve port 131.

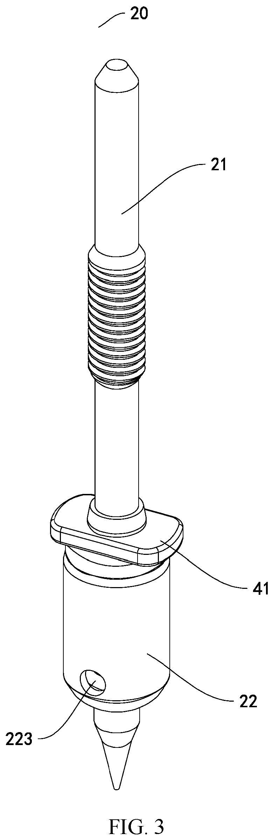

In some optional embodiments of this application, as shown in FIG. 3, a side wall of the accommodation cavity 221 is provided with a communication hole 223 that passes through the side wall. The communication hole 223 is configured to balance air pressures inside and outside the accommodation cavity 221. When the valve stem 21 compresses the elastic member 44 in the accommodation cavity 221, an air pressure inside the accommodation cavity 221 is prevented from being compressed, thereby helping reduce resistance that the valve stem 21 encounters when compressing the elastic member 44.

In addition, when the valve needle assembly 20 opens the valve port 131, an external refrigerant enters the electronic expansion valve 1 and flows out of the valve port 131. A refrigerant entering the electronic expansion valve 1 may enter the accommodation cavity 221 through the communication hole 223 to lubricate the elastic member 44 in the accommodation cavity 221. A refrigerant in the accommodation cavity 221 may flow into the valve seat assembly 10 to lubricate parts within the valve seat assembly 10, thereby reducing wear between the parts.

In some embodiments of this application, a movement distance of the stopper 23 in the movement direction of the valve stem ranges from 0.1 mm to 0.3 mm. That is, a range in which the valve stem 21 and the valve needle 22 move relatively ranges from 0.1 mm to 0.3 mm. In order to ensure that the elastic member 44 does not fail, the elastic member 44 applies a force to the valve needle 22, so that the valve needle 22 can sufficiently seal the valve port 131.

In some examples, the movement distance of the stopper 23 is 0.1 mm, 0.11 mm, 0.15 mm, 0.2 mm, 0.24 mm, 0.25 mm, 0.28 m, or 0.3 mm.

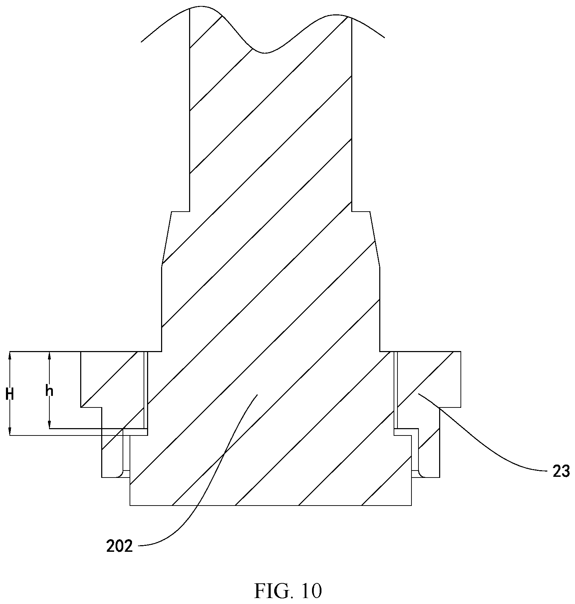

In some embodiments, as shown in FIG. 2 and FIG. 10, the valve needle assembly 20 may perform reciprocating movement along the up-down direction to open or close the valve port 131. The valve needle 22 defines the accommodation cavity 221. The valve needle 22 includes a stopper 23. The valve stem 21 includes a first part 201, a second part 202, and a third part 203 disposed from bottom to top. A diameter of the first part 201 is greater than a diameter of the second part 202. An end face that is of the first part 201 and that extends beyond the second part 202 defines the first stop surface 215. The diameter of the second part 202 is greater than a diameter of the third part 203. An end face that is of the second part 202 and that extends beyond the third part 203 defines a first step portion 212.

The guide block 41 is sleeved on the third part 203. The guide block 41 is in an interference fit with the third part 203. A lower end of the guide block 41 cooperates with the first step portion 212 in an abutting manner. A lower end face of the guide block 41 defines a second stop surface 216. The stopper 23 is sleeved on the second part 202. The stopper 23 includes a first cooperation surface 231 and a second cooperation surface 232. A length of the second part 202 along the up-down direction is H. Lengths of the first cooperation surface 231 and the second cooperation surface 232 along the up-down direction are h. H is greater than h, so that the stopper 23 can perform reciprocating movement along the up-down direction on an outer side of the second part 202.

When the valve needle assembly 20 opens the valve port 131, the valve stem 21 moves upward. In this case, the first stop surface 215 cooperates with the stopper 23 in an abutting manner. In this case, a length of the elastic member 44 in the accommodation cavity 221 along the up-down direction is the longest. When the valve needle assembly 20 closes the valve port 131, the valve stem 21 moves downward. The valve stem 21 moves downward relative to the valve needle 22, and compresses the elastic member 44 in the accommodation cavity 221. When the second stop surface 216 cooperates with the stopper 23 in an abutting manner, the length of the elastic member 44 in the accommodation cavity 221 along the up-down direction is the shortest.

A value of H-h ranges from 0.1 mm to 0.3 mm, so that a downward movement distance of the valve stem 21 relative to the valve needle 22 ranges from 0.1 mm to 0.3 mm, thereby controlling a degree to which the valve stem 21 compresses the elastic member 44.

In some examples, the electronic expansion valve 1 further includes a rotor assembly 60 and a conversion member 50. The rotor assembly 60 cooperates with the conversion member 50 fixedly to drive the conversion member 50 to rotate. The conversion member 50 threadedly cooperates with the valve stem 21. When the conversion member 50 rotates, the conversion member 50 drives the valve stem 21 to perform reciprocating movement along the up-down direction (It should be understood herein that the foregoing direction limitation is only for the purpose of facilitating the description of the accompanying drawings, and does not limit an actual arrangement position and direction of the electronic expansion valve 1). A motor requires 96 steps to drive the rotor assembly 60 to rotate for one circle. One circle of rotation of the conversion member 50 may drive the valve needle assembly 20 to move by 0.5 mm.

When the valve needle assembly 20 needs to open the valve port 131, the motor is set to require 38 steps to open the valve port 131. That is, the motor requires 38 steps to drive the valve stem 21 to move from a position in which the elastic member 44 is compressed to a position in which the valve needle 21 is driven to move. In this process, the stopper 23 switches from cooperation with the second stop surface 216 in an abutting manner to cooperation with the first stop surface 215 in an abutting manner.

The movement distance of the stopper 23 is 0.2 mm. That is, a value of H-h is 0.2 mm. That is, after 38 steps of operation of the motor, the conversion member drives the valve stem 21 to move upward by 38/96*0.5 ≈ 0.2mm. In this case, the second cooperation surface 232 cooperates with the second stop surface 216 in an abutting manner. In this case, the valve needle 22 begins to gradually open the valve port 131.

An electronic expansion valve 1 according to an embodiment of this application is described below. The electronic expansion valve 1 according to this embodiment of this application includes a valve seat assembly 10, a valve needle assembly 20, and a valve needle assembly 20 of the electronic expansion valve 1 according to the foregoing embodiment of this application.

The valve seat assembly 10 is provided with a valve port 131. The valve needle assembly 20 may perform reciprocating movement within the valve seat assembly 10 to open or close the valve port 131.

In the electronic expansion valve 1 according to this embodiment of this application, the valve needle assembly 20 of the electronic expansion valve 1 according to the foregoing embodiment of this application is used to apply a force to the valve needle 22. In this way, the valve needle 22 can sufficiently seal the valve port 131, thereby reducing possibility of liquid leakage when the electronic expansion valve 1 closes the valve port 131, and helping improve a qualification rate of the electronic expansion valve 1.

In some embodiments of this application, the electronic expansion valve 1 further includes a conversion member 50. The conversion member 50 cooperates with the valve needle assembly 20 to convert rotation of the conversion member 50 into reciprocating movement of the valve needle assembly 20, so that the valve needle assembly 20 can perform reciprocating movement within the valve seat assembly 10 to open or close the valve port.

In some embodiments, the conversion member 50 threadedly cooperates with the valve stem 21. When the conversion member 50 rotates, the conversion member 50 can drive the valve stem 21 to perform reciprocating movement, and the valve stem 21 can drive the valve needle 22 to perform reciprocating movement, so that the valve needle 22 can smoothly open or close the valve port 131.

In some embodiments of this application, the electronic expansion valve 1 further includes a cooperation bearing 42. The cooperation bearing 42 is disposed between the conversion member 50 and the valve seat assembly 10. The cooperation bearing 42 is configured to support rotation of the conversion member 50, so that the conversion member 50 can smoothly rotate, the conversion member 50 can smoothly drive the valve needle assembly 20 to perform reciprocating movement, and the valve needle assembly 20 can smoothly open or close the valve port 131.

In some embodiments, the cooperation bearing 42 includes an inner ring assembly 421 and an outer ring assembly 422. The outer ring assembly 422 is fastened to the valve seat assembly 10. The inner ring assembly 421 is fastened to the conversion member 50. When the conversion member 50 rotates, the conversion member 50 may drive the inner ring assembly 421 to rotate, so that the conversion member 50 can rotate relative to the valve seat assembly 10, and the conversion member 50 can smoothly drive the valve needle assembly 20 to perform reciprocating movement.

A thermal management system 92 according to an embodiment of this application is described below. The thermal management system 92 according to this embodiment of this application includes the electronic expansion valve 1 according to the foregoing embodiment of this application.

In the thermal management system 92 according to this embodiment of this application, the electronic expansion valve 1 according to the foregoing embodiment of this application is used, so that the elastic member 44 is used to apply a force toward the valve port 131 to the valve needle 22. In this way, the valve needle 22 can sufficiently seal the valve port 131, thereby reducing possibility of liquid leakage when the electronic expansion valve 1 closes the valve port 131, and helping improve a qualification rate of the electronic expansion valve 1.

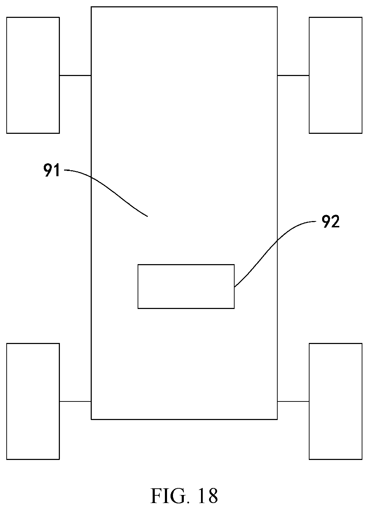

A vehicle 91 according to an embodiment of this application is described below with reference to FIG. 18. The vehicle 91 according to this embodiment of this application includes the thermal management system 92 according to the foregoing embodiment of this application.

In the vehicle 91 according to this embodiment of this application, the thermal management system 92 according to the foregoing embodiment of this application is used, so that an elastic member 44 is used to apply a force toward a valve port 131 to a valve needle 22. In this way, the valve needle 22 can sufficiently seal the valve port 131, thereby reducing possibility of liquid leakage when the electronic expansion valve 1 closes the valve port 131, and helping improve a qualification rate of the electronic expansion valve 1.

Other structures and operations of the vehicle 91 according to this embodiment of this application are known to a person of ordinary skill in the art, which will not be described in detail herein.

In the description of this specification, descriptions referring to the terms "one embodiment", "some embodiments", "an example", "a specific example", or "some examples" mean that specific features, structures, materials, or characteristics described in connection with the embodiment or example are included in at least one embodiment or example of this application. In this specification, the schematic representations of the foregoing terms are not necessarily aimed at the same embodiment or example. Moreover, the specific features, structures, materials or characteristics described may be combined in any one or more embodiments or examples in a suitable manner. In addition, those skilled in the art may combine and integrate different embodiments or examples described in this specification.

Although embodiments of this application have been shown and described above, it should be understood that the foregoing embodiments are examples and should not be construed as limiting this application. A person of ordinary skill in the art may make changes, modifications, substitutions, and variations to the foregoing embodiments within the scope of this application.

## Claims

1. A valve needle assembly of an electronic expansion valve, comprising:
a valve stem, wherein the valve stem is provided with a first stop surface and a second stop surface, and the first stop surface and the second stop surface are spaced apart in a movement direction of the valve stem;
a valve needle, wherein the valve needle is provided with a stopper, at least a part of the stopper is located between the first stop surface and the second stop surface, and the valve needle is movable relative to the valve stem, so that the stopper switches between abutting against the first stop surface and abutting against the second stop surface; and
an elastic member, wherein the elastic member is connected to the valve stem and the valve needle, and the elastic member applies a force to the valve needle in a direction away from the valve stem.

2. The valve needle assembly of the electronic expansion valve according to claim 1, wherein an end that is of the valve stem and that faces the valve needle comprises a first part and a second part, the first part is located on a side that is of the second part and that faces the valve needle, a diameter of the first part is greater than a diameter of the second part, and an end face that is of the first part and that extends beyond the second part defines the first stop surface.

3. The valve needle assembly of the electronic expansion valve according to claim 2, wherein the valve stem further comprises a guide block, the guide block is sleeved on the valve stem, and an end face that is of the guide block and that faces the first stop surface defines the second stop surface.

4. The valve needle assembly of the electronic expansion valve according to claim 3, wherein the guide sleeve and the valve stem are of an integrally formed member.

5. The valve needle assembly of the electronic expansion valve according to claim 3 or 4, wherein the valve stem further comprises a third part, the third part is connected to the second part, the diameter of the second part is greater than a diameter of the third part, and the guide block is sleeved on the third part and abuts against the second part.

6. The valve needle assembly of the electronic expansion valve according to claim 5, wherein the valve stem further comprises a guide surface, the guide surface is located on a side that is of the third part and that is away from the second part, and the guide surface extends obliquely toward the third part to guide mounting of the guide block.

7. The valve needle assembly of the electronic expansion valve according to claim 6, wherein a diameter of a cross section of the guide surface in a radial direction of the valve stem gradually increases in a direction from the valve stem to the valve needle.

8. The valve needle assembly of the electronic expansion valve according to any one of claims 1 to 7, wherein an accommodation cavity is disposed in the valve needle, and the elastic member is disposed in the accommodation cavity.

9. The valve needle assembly of the electronic expansion valve according to claim 8, wherein a side wall of the accommodation cavity is provided with a communication hole that passes through the side wall.

10. The valve needle assembly of the electronic expansion valve according to any one of claims 1 to 9, wherein a movement distance of the stopper in the movement direction of the valve stem ranges from 0.1 mm to 0.3 mm.

11. An electronic expansion valve, comprising:
a valve seat assembly, wherein the valve seat assembly is provided with a valve port; and
a valve needle assembly, wherein the valve needle assembly is the valve needle assembly of the electronic expansion valve according to any one of claims 1 to 10.

12. The electronic expansion valve according to claim 11, further comprising:
a conversion member, wherein the conversion member cooperates with the valve needle assembly to convert rotation of the conversion member into reciprocating movement of the valve needle assembly.

13. The electronic expansion valve according to claim 12, further comprising:
a cooperation bearing, wherein the cooperation bearing is disposed between the conversion member and the valve seat assembly.

14. A thermal management system, comprising the electronic expansion valve according to any one of claims 11 to 13.

15. A vehicle, comprising the thermal management system according to claim 14.
